# EUROPÄISCHE PATENTSCHRIFT

(11) **EP 3 973 765 B1**
(45) Veröffentlichungstag und Bekanntmachung des Hinweises auf die Patenterteilung: **27.11.2024**
(21) Anmeldenummer: 21198206.1
(22) Anmeldetag: 22.09.2021
(51) Int. Cl.: A01D 43/10

(54) **MÄHWERK MIT WALZENAUFBEREITER**
MOWER WITH ROLLER CONDITIONER
BARRE DE COUPE POURVU DE ROULEAUX CONDITIONNEURS

(30) Priorität: 24.09.2020 DE 102020124992
(43) Veröffentlichungstag der Anmeldung: 30.03.2022
(73) Patentinhaber: CLAAS Saulgau GmbH, 88348 Bad Saulgau (DE)
(72) Erfinder: Epp, Siegfried, 88436 Eberhardzell (DE)

(56) Entgegenhaltungen:
- US-A1- 2006 123 759
- US-A1- 2015 052 866
- US-B1- 6 220 007

## Beschreibung

Die Erfindung betrifft ein Mähwerk nach dem Oberbegriff des Anspruchs 1.

Aus US 6,220,007 B1 sind zwei miteinander verzahnte Mähaufbereiter-Walzen mit einem aus vier Zahnrädern bestehenden Steuergetriebe bekannt, welches es den Walzen ermöglicht, sich voneinander zu trennen, wobei die Umfangsposition der Verzahnungen beibehalten bleibt.

Aus der EP 0 286 826 A1 ist ein Mähwerk mit einem Walzenaufbereiter bekannt. Das Mähwerk verfügt über mehrere Mähorgane, die unter Ausbildung eines Mähbalkens nebeneinander angeordnet sind. Der Walzenaufbereiter des Mähwerks verfügt über eine untere und eine obere Aufbereiterwalze. Die untere Aufbereiterwalze ist um eine ortsfeste Drehachse drehbar. Die obere Aufbereiterwalze ist um eine Drehachse drehbar, die höhenbeweglich und demnach verlagerbar ist. Hierdurch kann ein zwischen den beiden Aufbereiterwalzen definierter Spalt, durch den gemähtes Erntegut hindurchgefördert und bei der Hindurchbeförderung aufbereitet wird, in seiner Abmessung verändert werden. Bei der Aufbereitung werden Pflanzenteile wie Blätter oder Halme insbesondere mehrfach geknickt, wodurch sich die Trocknungszeit des Ernteguts verkürzt. Nach der EP 0 286 826 A1 werden beide Aufbereiterwalzen ausgehend von einem Verteilergetriebe über Gelenkwellen angetrieben. So greift an der unteren Aufbereiterwalze eine untere Gelenkwelle und an der oberen Aufbereiterwalze eine obere Gelenkwelle an, die ausgehend vom Verteilergetriebe angetrieben werden. Die Verwendung eines Verteilergetriebes mit derartigen Gelenkwellen zum Antreiben der beiden Aufbereitungswalzen des Walzenaufbereiters verfügt über den Nachteil, dass in Axialrichtung der Aufbereitungswalzen gesehen eine relativ lange Bauform des Mähwerks bedingt wird, nämlich durch den für die Gelenkwellen benötigten Bauraum. Es besteht Bedarf daran, die beiden Aufbereitungswalzen des Walzenaufbereiters eines Mähwerks bei geringem Bauraumbedarf zuverlässig anzutreiben.

Hiervon ausgehend liegt der vorliegenden Erfindung die Aufgabe zugrunde, ein neuartiges Mähwerk zu schaffen. Diese Aufgabe wird durch ein Mähwerk nach Anspruch 1 gelöst. Erfindungsgemäß sind die untere Aufbereitungswalze und die obere Aufbereitungswalze über ein scherenartiges Getriebe miteinander gekoppelt, wobei mit der unteren Aufbereitungswalze ein erstes Getriebeteil und mit der oberen Aufbereitungswalze ein zweites Getriebeteil gekoppelt ist, und die Getriebeteile miteinander in Wirkverbindung stehen sowie scherenartig zueinander verlagerbar sind.

Durch das scherenartige Getriebe mit den beiden scherenartig zueinander verlagerbaren Getriebeteilen kann bei geringem Bauraumbedarf eine zuverlässige Antriebsverbindung zwischen den beiden Aufbereitungswalzen gewährleistet werden.

Nach einer vorteilhaften Weiterbildung weist das erste Getriebeteil eine erste Anzahl von ineinander kämmenden Zahnrädern und das zweite Getriebeteil eine zweite Anzahl von ineinander kämmenden Zahnrädern auf, die um Eins von der ersten Anzahl abweicht, wobei die erste Anzahl an Zahnrädern des ersten Getriebeteils vorzugsweise um Eins größer ist als die zweite Anzahl an Zahnrädern des zweiten Getriebeteils. Besonders bevorzugt weist das erste Getriebeteil eine Anzahl von vier Zahnrädern und das zweite Getriebeteil eine Anzahl von drei Zahnrädern auf. Dies ist bevorzugt, um bei geringem Bauraumbedarf die obere höhenbeweglich gelagerte Aufbereitungswalze zuverlässig anzutreiben.

Nach einer vorteilhaften Weiterbildung ist ein erstes Zahnrad des ersten Getriebeteils mit der Drehachse der unteren Aufbereitungswalze drehfest gekoppelt, wobei ein erstes Zahnrad des zweiten Getriebeteils mit der Drehachse der oberen Aufbereitungswalze drehfest gekoppelt ist, und wobei ein zweites Zahnrad des ersten Getriebeteils und ein zweites Zahnrad des zweiten Getriebeteils auf einer verlagerbare Scherenachse angeordnet sind und beide zusammen mit der Scherenachse mit der gleichen Drehzahl und der gleichen Drehrichtung rotieren. Auch dies dient dem zuverlässigen Antreiben der oberen Aufbereitungswalze bei geringem Bauraumbedarf.

Nach einer vorteilhaften Weiterbildung ist in Axialrichtung der Aufbereitungswalzen gesehen das erste Getriebeteil zwischen den Aufbereitungswalzen und dem zweiten Getriebeteil angeordnet. Vorzugsweise ist das zweite Getriebeteil mit der Drehachse der oberen Aufbereitungswalze über eine Gelenkkupplung drehfest gekoppelt, die in Axialrichtung der Aufbereitungswalzen gesehen zwischen den Aufbereitungswalzen und dem zweiten Getriebeteil und in Gutflussrichtung der Aufbereitungswalzen vor dem ersten Getriebeteil angeordnet ist. Auch hiermit kann der Bauraumbedarf weiter reduziert werden. Die Gelenkkupplung erlaubt selbst bei Winkelverlagerungen der oberen Aufbereitungswalze ein zuverlässiges Antreiben derselben über das scherenartige Getriebe. Als winkelbewegliche Kupplung kann beispielsweise eine Kreuzgelenkkupplung, eine Klauenkupplung oder ein Gleichlaufgelenk vorgesehen werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: einen Ausschnitt aus einem erfindungsgemäßen Mähwerk in perspektivischer Ansicht von vorne und oben;
- Fig. 2: ein Detail der Fig. 1 von einer ersten Seite;
- Fig. 3: ein Detail der Fig. 2 von einer zweiten Seite; und
- Fig. 4: das Detail der Fig. 2, 3 von der zweiten Seite mit entfernten Gehäuseabdeckungen.

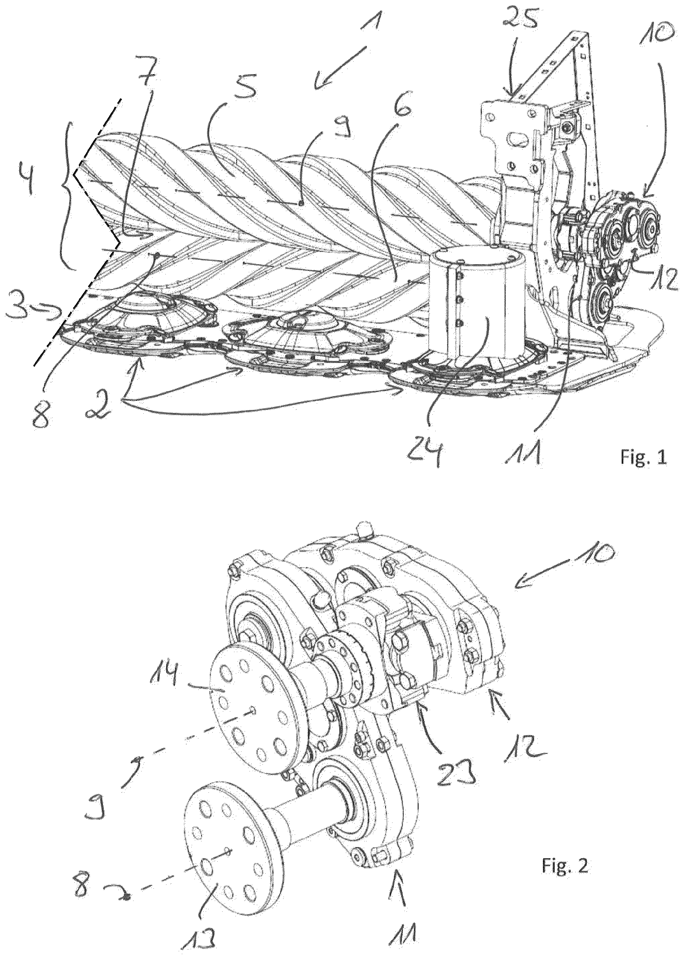

Die hier vorliegende Erfindung betrifft ein Mähwerk 1. Fig. 1 zeigt einen Ausschnitt aus einem Mähwerk 1, welches mehrere Mähorgane 2 aufweist. Die Mähorgane 2 sind unter Ausbildung eines Mähbalkens 3 nebeneinander angeordnet. Bei den Mähorganen 2 handelt es sich im gezeigten Ausführungsbeispiel um Mähscheiben, sodass demnach das Mähwerk 1 als Scheibenmähwerk ausgebildet ist. Die Erfindung kann auch bei anderen Mähwerken, wie z. B. Trommelmähwerken zum Einsatz kommen.

Das Mähwerk 1 verfügt weiterhin über einen in Gutflussrichtung von gemähtem Erntegut hinter dem Mähbalken 3 angeordneten Walzenaufbereiter 4, wobei der Walzenaufbereiter 4 eine obere Aufbereitungswalze 5 und eine untere Aufbereitungswalze 6 aufweist. Die obere Aufbereitungswalze 5 und die untere Aufbereitungswalze 6 definieren einen Spalt 7, wobei durch den Spalt 7 gemähtes Erntegut hindurchgefördert und beim Hindurchfördern aufbereitet wird, indem Pflanzenteile wie Blätter oder Halme insbesondere mehrfach geknickt werden, um die Trocknungszeit des Ernteguts zu verkürzen.

Die untere Aufbereitungswalze 6 ist um eine untere Drehachse 8 drehbar gelagert, die ortsfest ist. Die obere Aufbereitungswalze 7 ist um eine obere Drehachse 9 drehbar gelagert, die relativ zu unteren Drehachse 8 zur Veränderung des Spalts 7 zwischen den Aufbereitungswalzen 5, 6 verlagerbar ist. Zur Vergrößerung des Spalts 7 wird die Drehachse 9 der oberen Aufbereitungswalze 5 von der Drehachse 8 der unteren Aufbereitungswalze 6 wegbewegt, zur Verkleinerung des Spalts 7 wird die Drehachse 9 in Richtung auf die Drehachse 8 hinbewegt.

Die untere Aufbereitungswalze 6, die um die ortsfeste Drehachse 8 drehbar ist, wird von einem Antrieb aus angetrieben der mit dem nicht dargestellten anderen Ende der unteren Aufbereitungswalze 6 gekoppelt ist und der in Fig. 1 nicht sichtbar ist. Um auch die obere Aufbereitungswalze 5 anzutreiben, verfügt der Walzenaufbereiter 4 über ein Getriebe 10, welches in Fig. 2, 3 und 4 in Alleindarstellung gezeigt ist.

Bei dem Getriebe 10 handelt es sich um ein scherenartiges Getriebe, über welches die untere Aufbereitungswalze 6 mit der oberen Aufbereitungswalze 5 gekoppelt ist, um die obere Aufbereitungswalze 5 ausgehend von der unteren Aufbereitungswalze 6 anzutreiben. Das Getriebe 10 ist axial seitlich neben den Aufbereitungswalzen 5, 6 und einem Gehäuseabschnitt 25 des Mähwerks 1 angeordnet. Das scherenartige Getriebe 10 verfügt über zwei Getriebeteile 11, 12. Die untere Aufbereitungswalze 6 ist dabei mit einem ersten Getriebeteil 11 gekoppelt, und zwar über einen Flansch 13. Die obere Aufbereitungswalze 5 ist mit einem zweiten Getriebeteil 12 gekoppelt, und zwar über einen Flansch 14.

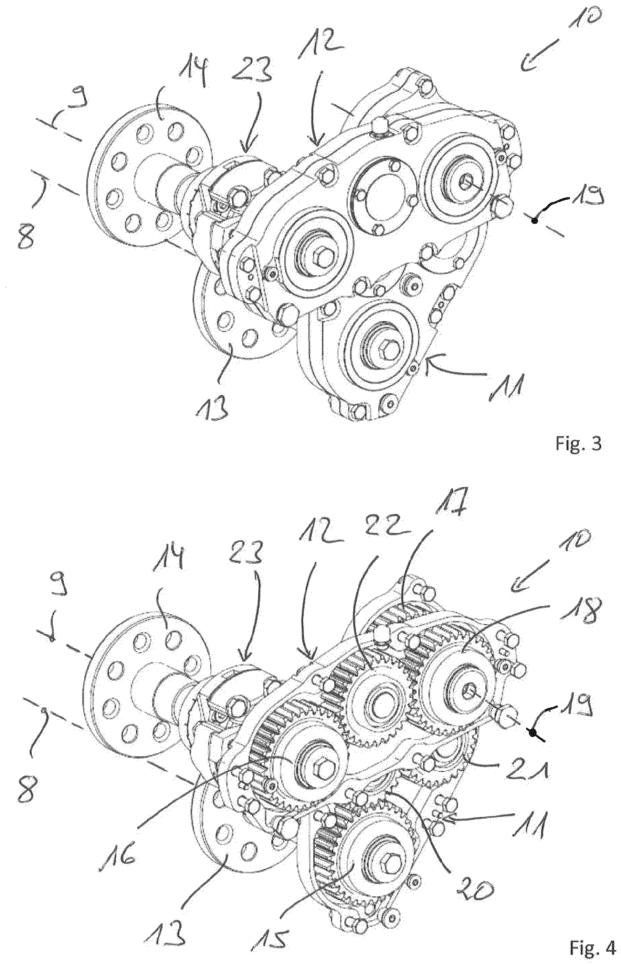

Das erste Getriebeteil 11 verfügt über ein erstes Zahnrad 15 (Fig. 4), welches mit der Drehachse 8, um welche die untere Aufbereitungswalze 6 drehbar gelagert ist, drehfest gekoppelt ist. Das zweite Teilgetriebe 12 verfügt ebenfalls über ein erstes Zahnrad 16, welches mit der Drehachse 9, um welche die obere Aufbereitungswalze 5 drehbar gelagert ist, drehfest gekoppelt ist.

Beide Getriebeteile 11 und 12 verfügen weiterhin über jeweils ein zweites Zahnrad 17, 18, nämlich das erste Getriebeteil 11 über das zweite Zahnrad 17 und das zweite Getriebeteil 12 über das zweite Zahnrad 18, die beide gemeinsam auf einer Zwischenwelle, die eine Scherenachse 19 definiert, hintereinander angeordnet sind, und zwar derart, dass die beiden Zahnräder 17, 18 mit derselben Drehzahl und derselben Drehrichtung rotieren.

Zwischen das erste Zahnrad 15 und das zweite Zahnrad 17 des ersten Getriebeteils 11 sind dabei im gezeigten Ausführungsbeispiel die beiden Zahnräder 20, 21 derart geschaltet, dass das Zahnrad 20 in das Zahnrad 15 und das Zahnrad 21 in die Zahnräder 20 und 17 kämmt. Im Bereich des zweiten Getriebeteils 12 ist zwischen das erste Zahnrad 16 und das zweite Zahnrad 18 ein einziges weiteres Zahnrad 22 geschaltet, welches in die Zahnräder 16, 18 kämmt.

Durch die gewählte Anzahl und Anordnung der Zahnräder 15, 16, 17, 18, 20, 21 und 22 der beiden Getriebeteile 11, 12 des scherenartigen Getriebes 10 ist sichergestellt, dass dann, wenn die untere Aufbereitungswalze 6 in einer definierten Drehrichtung rotiert, die obere Aufbereitungswalze 5 in einer entgegengesetzten Drehrichtung rotiert, um gemähtes Erntegut sicher und zuverlässig durch den zwischen den beiden Aufbereitungswalzen 5 und 6 definierten Spalt 7 zu fördern.

Das erste Getriebeteil 11 verfügt demnach über eine erste Anzahl von ineinander kämmenden Zahnrädern 15, 20, 21 und 17, wobei das zweite Getriebeteil 12 eine zweite Anzahl von ineinander kämmenden Zahnrädern 16, 22 und 18 aufweist, wobei die beiden Anzahlen an Zahnrädern der beiden Getriebeteile 11, 12 derart voneinander abweichen, dass die erste Anzahl an Zahnrädern des ersten Getriebeteils 11 größer ist als die zweite Anzahl an Zahnrädern des zweiten Getriebeteils 12, und zwar derart, dass die erste Anzahl an Zahnrädern des ersten Getriebeteils 11 um 1 größer als die zweite Anzahl an Zahnrädern des zweiten Getriebeteils 12. Im gezeigten Ausführungsbeispiel umfasst das erste Getriebeteil 11 eine Anzahl von vier und das zweite Getriebeteil 12 eine Anzahl von drei Zahnrädern.

Unabhängig von dieser konkreten Ausführungsform muss eines der beiden Getriebeteile 11, 12 ein Zahnrad mehr aufweisen als das andere, um eine Drehrichtungsumkehr zu realisieren.

Das scherenartige Getriebe 10 ist im Bereich des ersten Zahnrads 15 des ersten Getriebeteils 11 ortsfest an die ortsfeste Drehachse 8 der unteren Aufbereitungswalze 6 angebunden. Die übrigen Zahnräder der beiden Getriebeteile 11, 12 des scherenartigen Getriebes 10 sind verlagerbar, und zwar das erste Zahnrad 16 des zweiten Getriebeteils 12 zusammen mit der Drehachse 9 der oberen Aufbereitungswalze 5 und die beiden zweiten Zahnräder 17 und 18 der beiden Getriebeteile 11, 12 zusammen mit der verlagerbaren Scherenachse 19.

Es ist bevorzugt, in Axialrichtung der Aufbereitungswalzen 5, 6 gesehen, das erste Getriebeteil 11 zwischen den Aufbereitungswalzen 5, 6 und dem zweiten Getriebeteil 12 anzuordnen. Dies ist für eine besonders kompakte Bauform von Vorteil.

Vorzugsweise erstreckt sich das erste Getriebeteil 11 ausgehend vom ersten Zahnrad 15 und damit ausgehend von der Drehachse 8 der unteren Aufbereitungswalze 6 in Gutflussrichtung des gemähten Ernteguts gesehen nach oben und hinten in Richtung auf die Scherenachse 9.

Das zweite Getriebeteil 12 erstreckt sich ausgehend von der Scherenachse 19 vorzugsweise in Richtung auf die Drehachse 9 der oberen Aufbereitungswalze 5, und zwar im Wesentlichen waagerecht bzw. in horizontaler Richtung.

Die Scherenachse 19 liegt - wie in Fig. 1 dargestellt - in Gutflussrichtung gesehen vorzugsweise hinter den Drehachsen 8, 9 der Aufbereitungswalzen 5, 6, so dass die Getriebeteile 11, 12 vorteilhaft den verfügbaren Bauraum ausnutzen.

Es ist jedoch auch möglich, die Scherenachse 19 in Gutflussrichtung gesehen vor den Drehachsen 8, 9 anzuordnen.

Wie am besten Fig. 2 entnommen werden kann, greift das zweite Getriebeteil 12 an der Drehachse 9 der oberen Aufbereitungswalze 5 unter Zwischenanordnung einer Gelenkkupplung 23 an. Dies ist von Vorteil, um einen sich gegebenenfalls ausbildenden Winkelversatz infolge einer Verlagerung der oberen Aufbereitungswalze 5 relativ zur unteren Aufbereitungswalze 6 zu kompensieren. In Axialrichtung der Aufbereitungswalzen 5, 6 gesehen ist die Gelenkkupplung 23 zwischen den Aufbereitungswalzen 5, 6 und dem zweiten Getriebeteil 12 angeordnet. In Gutflussrichtung gesehen ist die Gelenkkupplung 23 vor dem ersten Getriebeteil 11 angeordnet, in Axialrichtung zumindest abschnittsweise überlappend mit dem ersten Getriebeteil 11. Die Getriebeteile 11, 12 müssen so gestaltet sein, dass sich die Aufbereitungswalzen 5, 6 soweit zueinander bewegen können, um den Spalt 7 vollständig zu schließen, wobei noch ausreichend Bauraum frei bleibt, damit die Gelenkkupplung 23 sich frei drehen kann.

Die beiden Getriebeteile 11, 12 sind in sich geschlossene Bauteile, die jeweils von einem eigenen Gehäuse umgeben sind und über eine Zwischenwelle, welche die Scherenachse 19 definiert, miteinander gekoppelt sind. Durch die vorteilhafte Kopplung mittels der Zwischenwelle lassen sich die Getriebetele 11, 12 scherenartig zueinander verlagern und die Gehäuse der beiden Getriebeteile 11, 12 können an der Kopplungsstelle vorteilhaft einfach durch Radialwellendichtringe abgedichtet werden.

Da das Getriebe 10 bzw. die jeweiligen Getriebeteile 11, 12 ausschließlich an den Flanschen 14 - also den Verlängerungen der Drehachsen 8, 9 der Aufbereitungswalzen 5, 6 - gelagert ist/sind, kann sich die Scherenachse 19 in einer orthogonal zur Scherenachse 19 verlaufenden Ebene frei bewegen. Weiterhin müssen vorteilhaft keine Halterungen zur Befestigung des Getriebes 10 vorgesehen werden.

In den beschriebenen Ausführungsbeispielen sind ausschließlich Zahnräder vorgesehen. Es ist jedoch auch möglich, einzelne oder alle Antriebsverbindungen durch Zahnriemen oder Ketten zu realisieren, wobei die erforderliche Drehrichtungsumkehr beibehalten werden muss.

Bei dem erfindungsgemäßen Mähwerk 1 können beide Aufbereitungswalzen 5 und 6 zuverlässig angetrieben werden, und zwar bei minimalem Bauraumbedarf für das scherenartige Getriebe 10. Dieses verfügt in Axialrichtung gesehen über eine Breite von maximal 300 Millimeter (mm), insbesondere über eine Breite zwischen 250 mm und 300 mm, sodass axial seitlich neben den Aufbereitungswalzen 5 und 6 nur ein relativ geringer Bauraum für die Anordnung des Getriebes 10 benötigt wird. Daher ist es ausreichend, wenn lediglich dem jeweils äußersten Schneidorgan 2 ein zusammen mit dem Schneidorgan 2 rotierendes Förderelement 24 für Erntegut zugeordnet ist, welches als Fördertrommel ausgebildet ist und das Erntegut nach innen zum Einzugsbereich der Aufbereitungswalzen 5, 6 fördert.

Gemäß Fig. 1 sind die beiden Aufbereitungswalzen 5, 6 an ihrem Außenumfang wendelförmig konturiert bzw. profiliert und greifen über diese wendelförmigen Konturen formschlüssig ineinander.

Die Aufbereitungswalzen 5, 6 können aus Kunststoff, wie zum Beispiel PU oder auch aus einem metallischen Werkstoff, wie zum Beispiel Stahl gefertigt sein.

Die Konturierung und das Material der Aufbereitungswalzen 5, 6 haben jedoch keinen Einfluss auf die Erfindung und können demnach vom dargestellten und beschriebenen Ausführungsbeispiel abweichen.

### Bezugszeichenliste

- 1: Mähwerk
- 2: Mähorgan
- 3: Mähbalken
- 4: Walzenaufbereiter
- 5: Aufbereitungswalze
- 6: Aufbereitungswalze
- 7: Spalt
- 8: Drehachse
- 9: Drehachse
- 10: Getriebe
- 11: Getriebeteil
- 12: Getriebeteil
- 13: Flansch
- 14: Flansch
- 15: Zahnrad
- 16: Zahnrad
- 17: Zahnrad
- 18: Zahnrad
- 19: Scherenachse
- 20: Zahnrad
- 21: Zahnrad
- 22: Zahnrad
- 23: Gelenkkupplung
- 24: Förderorgan
- 25: Gehäuseabschnitt

## Patentansprüche

1. Mähwerk (1),
mit mehreren Mähorganen (2), die unter Ausbildung eines Mähbalkens (3) nebeneinander positioniert sind,
mit einem in Gutflussrichtung von gemähtem Erntegut gesehen hinter dem Mähbalken (3) angeordneten Walzenaufbereiter (4), der eine obere Aufbereitungswalze (5) und eine untere Aufbereitungswalze (6) aufweist,
wobei die untere Aufbereitungswalze (6) um eine untere, ortsfeste Drehachse (8) drehbar ist,
wobei die obere Aufbereitungswalze (5) um eine obere, verlagerbare Drehachse (9) derart drehbar ist, dass in Folge einer Verlagerung der oberen Drehachse (9) relativ zur unteren Drehachse (8) ein Spalt (7) zwischen den Aufbereitungswalzen (5, 6) veränderlich ist,
**dadurch gekennzeichnet, dass**
die untere Aufbereitungswalze (6) und die obere Aufbereitungswalze (5) über ein scherenartiges Getriebe (10) miteinander gekoppelt sind, wobei mit der unteren Aufbereitungswalze (6) ein erstes Getriebeteil (11) und mit der oberen Aufbereitungswalze (5) ein zweites Getriebeteil (12) gekoppelt ist, wobei die Getriebeteile (10, 11) miteinander in Wirkverbindung stehen und scherenartig zueinander verlagerbar sind.

2. Mähwerk nach Anspruch 1, **dadurch gekennzeichnet, dass**
das erste Getriebeteil (11) eine erste Anzahl von ineinander kämmenden Zahnrädern (15, 20, 21, 17) aufweist,
das zweite Getriebeteil (12) eine zweite Anzahl von ineinander kämmenden Zahnrädern (16, 22, 28) aufweist, die um Eins von der ersten Anzahl abweicht.

3. Mähwerk nach Anspruch 2, **dadurch gekennzeichnet, dass** die erste Anzahl an Zahnrädern des ersten Getriebeteils (11) um Eins größer ist als die zweite Anzahl an Zahnrädern des zweiten Getriebeteils (12).

4. Mähwerk nach Anspruch 3, **dadurch gekennzeichnet, dass** das erste Getriebeteil (11) eine Anzahl von vier Zahnräder und das zweite Getriebeteil (12) eine Anzahl von drei Zahnrädern aufweist.

5. Mähwerk nach einem der Ansprüche 1 bis 4, **dadurch gekennzeichnet, dass**
ein erstes Zahnrad (15) des ersten Getriebeteils (11) mit der Drehachse (8) der unteren Aufbereitungswalze (6) drehfest gekoppelt ist,
ein erstes Zahnrad (16) des zweiten Getriebeteils (12) mit der Drehachse (9) der oberen Aufbereitungswalze (5) drehfest gekoppelt ist,
ein zweites Zahnrad (17) des ersten Getriebeteils (11) und ein zweites Zahnrad (18) des zweiten Getriebeteils (12) auf einer verlagerbaren Scherenachse (19) angeordnet sind und beide zusammen mit der Scherenachse (19) mit der gleichen Drehzahl und der gleichen Drehrichtung rotieren.

6. Mähwerk nach Anspruch 5, **dadurch gekennzeichnet, dass** sich das erste Getriebeteil (11) ausgehend von der Drehachse (8) der unteren Aufbereitungswalze (6) nach schräg oben und hinten in Richtung auf die Scherenachse (19) erstreckt, und dass sich das zweite Getriebeteil (12) ausgehend von Scherenachse (19) nach vorne in Richtung auf die Drehachse (9) der oberen Aufbereitungswalze (5) erstreckt.

7. Mähwerk nach einem der Ansprüche 1 bis 6, **dadurch gekennzeichnet, dass** in Axialrichtung der Aufbereitungswalzen (5, 6) gesehen das erste Getriebeteil (11) zwischen den Aufbereitungswalzen (5, 6) und dem zweiten Getriebeteil (12) angeordnet ist.

8. Mähwerk nach einem der Ansprüche 1 bis 7, **dadurch gekennzeichnet, dass** das zweite Getriebeteil (12) mit der Drehachse (9) der oberen Aufbereitungswalze (5) über eine Gelenkkupplung (23) drehfest gekoppelt ist.

9. Mähwerk nach Anspruch 8, **dadurch gekennzeichnet, dass** in Axialrichtung der Aufbereitungswalzen (5, 6) gesehen die Gelenkkupplung (23) zwischen den Aufbereitungswalzen (5, 6) und dem zweiten Getriebeteil (12) angeordnet ist.

10. Mähwerk nach Anspruch 9, **dadurch gekennzeichnet, dass** in Gutflussrichtung gesehen die Gelenkkupplung (23) vor dem ersten Getriebeteil (11) angeordnet ist.

## Claims

1. Mower (1),
having a plurality of mowing elements (2), which are positioned next to one another forming a mower bar (3),
having a roller conditioner (4), which is arranged behind the mower bar (3), as seen in the material flow direction of mowed crop, and which has an upper conditioning roller (5) and a lower conditioning roller (6),
wherein the lower conditioning roller (6) is rotatable about a lower, positionally fixed axis of rotation (8),
wherein the upper conditioning roller (5) is rotatable about an upper, shiftable axis of rotation (9) in such a manner that, as a result of shifting the upper axis of rotation (9) relative to the lower axis of rotation (8), a gap (7) between the conditioning rollers (5, 6) is changeable,
**characterized in that**
the lower conditioning roller (6) and the upper conditioning roller (5) are coupled to each other via a scissors-like transmission (10), wherein a first transmission part (11) is coupled to the lower conditioning roller (6) and a second transmission part (12) is coupled to the upper conditioning roller (5), wherein the transmission parts (10, 11) are operatively connected to each other and are shiftable in a scissors-like manner with respect to each other.

2. Mower according to Claim 1, **characterized in that**
the first transmission part (11) has a first number of intermeshing gear wheels (15, 20, 21, 17),
the second transmission part (12) has a second number of intermeshing gear wheels (16, 22, 28) that differs from the first number by one.

3. Mower according to Claim 2, **characterized in that** the first number of gear wheels of the first transmission part (11) is greater by one than the second number of gear wheels of the second transmission part (12).

4. Mower according to Claim 3, **characterized in that** the first transmission part (11) has four gear wheels and the second transmission part (12) has three gear wheels.

5. Mower according to one of Claims 1 to 4, **characterized in that**
a first gear wheel (15) of the first transmission part (11) is coupled to the axis of rotation (8) of the lower conditioning roller (6) for rotation therewith,
a first gear wheel (16) of the second transmission part (12) is coupled to the axis of rotation (9) of the upper conditioning roller (5) for rotation therewith,
a second gear wheel (17) of the first transmission part (11) and a second gear wheel (18) of the second transmission part (12) are arranged on a shiftable scissors axis (19) and the two gear wheels rotate together with the scissors axis (19) at the same rotational speed and in the same direction of rotation.

6. Mower according to Claim 5, **characterized in that** the first transmission part (11) extends obliquely upwards and rearwards from the axis of rotation (8) of the lower conditioning roller (6) in the direction of the scissors axis (19), and **in that** the second transmission part (12) extends forwards from the scissors axis (19) in the direction of the axis of rotation (9) of the upper conditioning roller (5).

7. Mower according to one of Claims 1 to 6, **characterized in that** the first transmission part (11) is arranged between the conditioning rollers (5, 6) and the second transmission part (12), as seen in the axial direction of the conditioning rollers (5, 6).

8. Mower according to one of Claims 1 to 7, **characterized in that** the second transmission part (12) is coupled via an articulated coupling (23) to the axis of rotation (9) of the upper conditioning roller (5) for rotation therewith.

9. Mower according to Claim 8, **characterized in that** the articulated coupling (23) is arranged between the conditioning rollers (5, 6) and the second transmission part (12), as seen in the axial direction of the conditioning rollers (5, 6).

10. Mower according to Claim 9, **characterized in that** the articulated coupling (23) is arranged in front of the first transmission part (11), as seen in the material flow direction.

## Revendications

1. Faucheuse (1),
ayant plusieurs organes de fauchage (2) qui sont positionnés les uns à côté des autres pour former une barre de coupe (3),
ayant un conditionneur à rouleaux (4) agencé derrière la barre de coupe (3), vu dans la direction du flux de récolte fauchée, qui présente un rouleau de conditionnement supérieur (5) et un rouleau de conditionnement inférieur (6),
le rouleau de conditionnement inférieur (6) étant apte à tourner autour d'un axe de rotation inférieur fixe (8), le rouleau de conditionnement supérieur (5) étant apte à tourner autour d'un axe de rotation supérieur déplaçable (9) de telle sorte, qu'en conséquence d'un déplacement de l'axe de rotation supérieur (9) par rapport à l'axe de rotation inférieur (8), une fente (7) entre les rouleaux de conditionnement (5, 6) est variable,
**caractérisée en ce que**
le rouleau de conditionnement inférieur (6) et le rouleau de conditionnement supérieur (5) sont reliés l'un à l'autre par l'intermédiaire d'un engrenage en forme de ciseaux (10), une première partie de transmission (11) étant reliée au rouleau de conditionnement inférieur (6) et une deuxième partie de transmission (12) étant reliée au rouleau de conditionnement supérieur (5), les parties de transmission (10, 11) étant en relation fonctionnelle entre elles et aptes à être déplacées l'une par rapport à l'autre à la manière de ciseaux.

2. Faucheuse selon la revendication 1, **caractérisée en ce que**
la première partie de transmission (11) présente un premier nombre de roues dentées (15, 20, 21, 17) s'engrenant les unes dans les autres,
la deuxième partie de transmission (12) présente un deuxième nombre de roues dentées (16, 22, 28) s'engrenant les unes dans les autres, qui diffère d'une unité du premier nombre.

3. Faucheuse selon la revendication 2, **caractérisée en ce que** le premier nombre de roues dentées de la première partie de transmission (11) est supérieur d'une unité au deuxième nombre de roues dentées de la deuxième partie de transmission (12).

4. Faucheuse selon la revendication 3, **caractérisée en ce que** la première partie de transmission (11) présente un nombre de quatre roues dentées et la deuxième partie de transmission (12) un nombre de trois roues dentées.

5. Faucheuse selon l'une des revendications 1 à 4, **caractérisée en ce que**
une première roue dentée (15) de la première partie de transmission (11) est reliée en rotation à l'axe de rotation (8) du rouleau de conditionnement inférieur (6), une première roue dentée (16) de la deuxième partie de transmission (12) est reliée en rotation à l'axe de rotation (9) du rouleau de conditionnement supérieur (5), une deuxième roue dentée (17) de la première partie de transmission (11) et une deuxième roue dentée (18) de la deuxième partie de transmission (12) sont agencées sur un axe de ciseaux (19) déplaçable et tournent toutes deux avec l'axe de ciseaux (19) à la même vitesse de rotation et dans le même sens de rotation.

6. Faucheuse selon la revendication 5, **caractérisée en ce que** la première partie de transmission (11) s'étend à partir de l'axe de rotation (8) du rouleau de conditionnement inférieur (6) vers le haut et vers l'arrière en direction de l'axe de ciseaux (19), et **en ce que** la deuxième partie de transmission (12) s'étend à partir de l'axe de ciseaux (19) vers l'avant en direction de l'axe de rotation (9) du rouleau de conditionnement supérieur (5).

7. Faucheuse selon l'une des revendications 1 à 6, **caractérisée en ce que**, vue dans la direction axiale des rouleaux de conditionnement (5, 6), la première partie de transmission (11) est agencée entre les rouleaux de conditionnement (5, 6) et la deuxième partie de transmission (12).

8. Faucheuse selon l'une des revendications 1 à 7, **caractérisée en ce que** la deuxième partie de transmission (12) est reliée en rotation avec l'axe de rotation (9) du rouleau de conditionnement supérieur (5) par l'intermédiaire d'un accouplement articulé (23).

9. Faucheuse selon la revendication 8, **caractérisée en ce que**, vu dans la direction axiale des rouleaux de conditionnement (5, 6), l'accouplement articulé (23) est agencé entre les rouleaux de conditionnement (5, 6) et la deuxième partie de transmission (12).

10. Faucheuse selon la revendication 9, **caractérisée en ce que**, vu dans la direction du flux de récolte, l'accouplement articulé (23) est agencé devant la première partie de transmission (11).
